# EUROPEAN PATENT SPECIFICATION

(11) **EP 3 914 771 B1**
(45) Date of publication and mention of the grant of the patent: **17.07.2024**
(21) Application number: 20701046.3
(22) Date of filing: 20.01.2020
(51) Int. Cl.: D21H 27/10, B65D 65/40, B65D 65/42, D21H 19/28

(54) **BIODEGRADABLE CONTAINER AND PLATE MATERIAL AND METHOD FOR THE MANUFACTURE THEREOF**
BIOLOGISCH ABBAUBARER BEHÄLTER UND PLATTENMATERIAL UND VERFAHREN ZU DESSEN HERSTELLUNG
RÉCIPIENT BIODÉGRADABLE ET MATÉRIAU DE PLAQUE ET SON PROCÉDÉ DE FABRICATION

(30) Priority: 21.01.2019 EP 19152714
(43) Date of publication of application: 01.12.2021
(73) Proprietor: Plantics Holding B.V., 6827 AV Arnhem (NL)
(72) Inventor: ALBERTS, Albert Henderikus, 1013 NG Amsterdam (NL); THYS, Ferry Ludovicus, 1932 St. Stevens Woluwe (BE); BAKKER, Wridzer Jan Willem, 6814 JT Arnhem (NL)
(74) Representative: De Vries & Metman
(86) International application number: PCT/EP2020/051238
(87) International publication number: WO 2020/152082

(56) References cited:
- WO-A1-2009/118377
- WO-A1-2018/067006
- US-A1- 2013 101 865

## Description

The invention pertains to a biodegradable container and plate material and a method for the manufacture thereof. The invention pertains in particular to a biodegradable container and plate material which shows one or more of the following properties: light weight, high (wet) strength, a desirable degree of flexibility, good (temporary) resistance against water, oil, and fat, and attractive visual and tactile characteristics.

Many products which are sold, are sold in some form of packaging. Packaging is intended to protect the product from the outside environment, and to keep the product together. At some point in its life cycle, the packaging will be discarded. To limit the ecological footprint of a product, it is highly desirable for a product to be biobased, non-toxic, recyclable, and if it enters the environment biodegradable. Biodegradable is e.g. defined in ASTM D5511 and ASTM D5538. On the other hand, before it is discarded the packaging material needs to be able to withstand environmental influences: depending on the packaged product, the packaging material may need to be able to withstand the influences from one or more of moisture, liquid water, oil and fat, and mechanical forces for prolonged periods of time. Additionally, depending on its use, attractive visual and tactile properties may be important.

An example of a particularly complicated packaging material is the plant pot. Many plants are sold to consumers in plastic plant pots of, e.g. polypropylene. When sold to consumers, these plant pots have a relatively short useful life, either because the plants are removed from the pots and planted into the ground or into another container, or because the plants themselves have a relatively short life, e.g., in the case of kitchen herbs, and many indoor and outdoor plants. In these cases, either the pots as such, or the pots with the remainder of the plants are discarded. The quick discarding thus implies a desire for a material creating little waste and easy handling when discarded. On the other hand, as the plants are grown in the pots, the pots need to be able to withstand the conditions under which the plants are grown, but also the conditions prevailing during transport, storage, and use.

The desire for a plant pot meeting the stated requirements is extensively discussed in European patent application EP3199018. It is indicated that the problem is solved by the provision of a biodegradable paper vessel structured from the waterproofing of recycled or non-recycled white paperboard or brown craft paper through superficial paper treatment with polymers of a special resin. However, this patent application contains no description of the nature of the proposed special resin.

US2018000017 describes a biodegradable plant pot which is especially intended for the growing of seedlings. The pots are particularly intended for the situation that seedlings are grown in a plant pot, and that as the seedling approaching maturity the pot with the seedling is transplanted into the ground, without having to remove the seedling from the pot. This reference describes biodegradable plant pots provided with an additive such as a wax emulsion, polyvinyl alcohol, polyvinyl acetate, or a combination thereof, to improve the tensile strength, the hydrophobicity, and the fungal growth resistance of the pots.

The materials proposed in this reference have a number of disadvantages. In the first place, they have a low solubility in water. While this may contribute to the provision of hydrophobicity to the plant pots, it may also make it difficult to form a homogeneous product.

Another example of a challenging packaging material is packaging for foods, in particular packaging which comes into contact with moisture, oil, or fat, or a combination thereof. This packaging needs to be able to withstand the influence of these substances for the life-time of the packaged food. On the other hand, the packaging generally is for single use, and therefore create limited waste.

The problem underlying the present invention is the provision of a biodegradable container or plate material, in particular a biodegradable packaging container, in some embodiments a biodegradable plant pot, which shows one or more, in particular a combination of, the following properties: lightweight, high (wet) strength, a desirable degree of flexibility, good (temporary) resistance against water, oil, and fat, and attractive visual and tactile characteristics. The present invention solves this problem.

The biodegradable container or plate material according to the invention shows one or more, in particular a combination of, the following properties: light weight, high (wet) strength, a desirable degree of flexibility, good (temporary) resistance against water, oil, and fat, and attractive visual and tactile characteristics.

The present invention pertains to a biodegradable container or plate material comprising a layer of cellulose-based material provided with a composite surface layer comprising cellulose-based material and a polyester derived from an aliphatic polyalcohol with 2-15 carbon atoms, the aliphatic polyalcohol containing at least 50 mole% of glycerol and an aliphatic polycarboxylic acid with 3 to 15 carbon atoms, wherein the polycarboxylic acid comprises at least 50 wt.% of citric acid, the cellulose-based material containing at least 70 wt.% of cellulose material.

It is noted that the use of polyesters of diols and diacids in the manufacture of paper-based products has been described.

WO2018067006 describes a biodegradable and compostable food packaging unit from a moulded pulp material which contains a biodegradable aliphatic polyester, preferably in the range of 0.5-20 wt.%. PBS (polybutylene succinate), PHB (polyhydroxybutyrate), PHA (polyhydroxyalkanoate), PCL (polycaprolactone), PLA (polylactic acid), PGA (polyglycolic acid), PHBH (the copolymer of 3-hydroxybutyrate and 3-hydroxyhexanoate) and PHBV (the copolymer of 3-hydroxybutyrate and 3-hydroxyvalerate), with PBS (polybutylene succinate) being preferred.

WO2009118377 describes a biodegradable polyester comprising units derived from at least a diacid and at least a diol, with long-chain branches and gel-free. The polyester is used in paper-based laminate products.

US20130101865 describes the use of an aqueous dispersion of at least one biodegradable polyester as coating for improving the barrier properties of packaging materials made of paper or paperboard. The polyesters are in particular polylactides (polylactic acid), polycaprolactone, block copolymers of polylactide with poly-C2-C4-alkylene glycol, block copolymers of polycaprolactone with poly-C2-C4-alkylene glycol, or copolyesters composed of at least one aliphatic or cycloaliphatic dicarboxylic acid or one ester-forming derivative thereof and of at least one aliphatic or cycloaliphatic diol component.

It has been found, however, that the use of polyesters of diols and dicarboxylic acids gives insufficient results, in particular as regards dry and wet strength of the materials obtained.

It is noted that WO2012/140237 describes a composite material comprising biofiller and at least 2 wt.% of a polyester matrix polymer derived from an aliphatic polyol with 2-15 carbon atoms and an aliphatic polycarboxylic acid. This reference is directed to the provision of composite materials as alternatives from medium density fiberboard (MDF), high-density fiberboard (HDF), plywood, oriented strand board (OSB), particle board, and paper-resin composites like Formica. It is indicated that the material is eminently suited as building material, due to its fire-resistant properties. The material is prepared by mixing the filler and the matrix polymer, by providing the filler in a mould and adding the matrix polymer, or by impregnating layers of a filler with the matrix polymer. In the examples, large amounts of polymer are used. This reference does not disclose the provision of a biodegradable container or plate material comprising a cellulose-based container or plate material provided with a composite surface layer comprising cellulose-based material and a polyester.

WO2012/140238 describes the use of a polyester polymer derived from an aliphatic polyol with 2-15 carbon atoms and an aliphatic polycarboxylic acid as coating or in the manufacture of laminates. Again, this reference does not disclose the provision of a biodegradable packaging material comprising a cellulose-based material provided with a composite surface layer of a polyester.

The present invention and preferred embodiments thereof with their associated advantages will be discussed in more detail below.

The cellulose-based material is provided with a composite surface layer comprising cellulose-based material and a specific polyester. The presence of a composite surface layer is a key feature of the present invention. It means that when looking at a cross-section of the biodegradable container or plate material according to the invention, part of the material contains the polyester and part of the material does not contain the polyester. In other words, a polyester-containing composite surface layer can be distinguished from a polyester-free layer. This polyester-free layer may be a core layer when both sides of the material are provided with a polyester-containing composite surface layer. The polyester-free layer may also be on one side of the object, in the case that only one side of the object material has been provided with a polyester-containing composite surface layer. It has been found that the combination of a polyester-containing composite surface layer with a polyester-free layer results in a product with desirable properties, in particular a combination of (wet) strength, barrier characteristics, and flexibility.

Biodegradable container or plate material according to any one of the preceding claims, wherein, calculated on the total of polyester-containing composite surface layer and polyester-free cellulose-based material, in in a cross-section of the biodegradable container or plate material, 5-90% of the cross-section is polyester-containing composite surface layer and 95-10% of the cross-section is polyester-free cellulose-based material, in particular for 20-80% of the cross-section to be polyester-containing composite surface layer and 80-20% of the cross-section to be polyester-free cellulose-based material, preferably for 30-70% of the cross-section to be polyester-containing composite surface layer and 70-30% of the cross-section to be polyester-free cellulose-based material.

In one embodiment, in a cross-section of the biodegradable container or plate material, 1-90% of the cross-section is polyester-containing composite surface layer and 99-10% of the cross-section is polyester-free cellulose-based material, calculated on the total of polyester-containing composite surface layer and polyester-free cellulose-based material. It may be preferred for 2-50% of the cross-section to be polyester-containing composite surface layer and 98-50% of the cross-section to be polyester-free cellulose-based material. In some embodiments it may be preferred for 2-30% of the cross-section to be polyester-containing composite surface layer and 98-70% of the cross-section to be polyester-free cellulose-based material.

In addition to the layer of cellulose-based material and a composite surface layer comprising cellulose-based material and polyester, it is possible for the biodegradable container or plate material have further layers, e.g., a cellulose-free polyester layer.

In the biodegradable container or plate material according to the invention, the cellulose-based material and the composite surface layer comprising cellulose-based material and a polyester are connected on the scale of the cellulose fibers. As will be discussed below, the composite surface layer is provided by impregnating a cellulose-based material with a liquid medium comprising polyester or polycarboxylic acid and polyalcohol precursors thereof. This means that the cellulose material in the cellulose-based layer and the cellulose material in the composite surface layer are continuous.

The starting material used in the present invention is thus based on a cellulose-based object, specifically a cellulose-based container, such as a box, pot, or any other container, or a cellulose-based plate material. The term cellulose-based is intended to mean that the object contains at least 70 wt.% of a cellulose material, e.g., derived from sources such as fresh or used paper, fresh or used cardboard, wood or other plant material in any form, or combinations thereof. In particular, the material or container contains at least 80 wt.% of cellulose material.

In one embodiment, the cellulose-based material is derived from so-called virgin pulp which is obtained directly from the wood pulping process. This pulp can come from any plant material but mostly from wood. Wood pulp comes from softwood trees such as spruce, pine, fir, larch and hemlock, and hardwoods such as eucalyptus, popular, aspen and birch. In one embodiment, the cellulose-based material comprises cellulose material derived from recycled paper, such as cellulose pulp obtained from regenerated books, papers, newspapers and periodicals, egg cartons, and other recycled paper or cardboard products. Combinations of cellulose sources may also be used.

The cellulose-based material may contain other components known in the art.

In one embodiment, the cellulose-based material comprises compounds which increase the water resistance or hydrophobicity of the material. Suitable compounds are known in the art, and include, for example, alkylketene dimers (AKD) derived from fatty acids obtained by hydrolyzing animal or vegetable fats and oils, or maleated alkenes such as isooctadecenylsuccinic anhydride (ASA).

The cellulose-based material may also comprise mineral fillers, to lower the consumption of more expensive components, or to provide the composite with specific properties. Mineral fillers are known in the art, and comprise, e.g., China clay, calcium carbonate, titanium dioxide, and talc.

The cellulose-based material may also comprise a binder. Binders are known in the art. Examples include carboxymethyl cellulose (CMC), cationic and anionic hydroxyethyl cellulose (EHEC), modified starch, and dextrin.

In one embodiment, the cellulose-based material comprises so-called wet-strength additives to help to ensure that the material retains its strength when wet. Wet-strength additives are known in the art and include epichlorohydrin, melamine, urea, formaldehyde, and polyimines. In one embodiment, the cellulose-based material comprises so-called dry-strength additives, also indicated as dry-strengthening agents, to improve one or more of compression strength, bursting strength, tensile breaking strength, and delamination resistance. Dry-strength additives are known in the art. Examples include cationic starch and polyacrylamide (PAM) derivatives.

As these components are known in the art of manufacturing cellulose materials, their use is within the scope of the skilled person, and no further elucidation is required.

The present invention makes use of a polyester derived from an aliphatic polyol with 2-15 carbon atoms, the aliphatic polyalcohol consisting for at least 50 mole% of glycerol, and an aliphatic polycarboxylic acid with 3 to 15 carbon atoms, wherein the polycarboxylic acid comprises at least 50 wt.% of citric acid.

The starting materials for the present invention are an aliphatic polyalcohol with 2-15 carbon atoms, the aliphatic polyalcohol consisting for at least 50 mole% of glycerol, and an aliphatic polycarboxylic acid, wherein the polycarboxylic acid comprises at least 50 wt.% of citric acid.

The aliphatic polyalcohol used in the present invention comprises at least two hydroxyl groups, in particular at least three hydroxyl groups. In general, the number of hydroxyl groups will be 10 or less, more in particular 8 or less, or even 6 or less, in particular two or three.

The polyalcohol has 2-15 carbon atoms. More in particular, the polyalcohol has 3-10 carbon atoms.

It is preferred for the polyalcohol to contain no N or S heteroatoms. More specifically it is preferred for the polyalcohol to contain no non-carbon groups than hydroxyl groups. More in particular the polyalcohol is an aliphatic polyalkanol containing only C, H, and O atoms.

In a preferred embodiment of the present invention the polyalcohol contains a relatively large number of hydroxyl groups in comparison with its number of carbon atoms. For example, the ratio between the number of hydroxyl groups and the number of carbon atoms ranges from 1:4 (i.e. one hydroxyl group per four carbon atoms, or 8 carbon atoms for a dialcohol) to 1:0.5 (i.e. 2 hydroxyl groups per carbon atom). In particular, the ratio between the number of hydroxyl groups and the number of carbon atoms ranges from 1:3 to 1:0.75, more specifically, from 1:2 to 1 :0.75. A group of specifically preferred polyalcohols is the group wherein the ratio ranges from 1:1.5 to 1:0.75. Compounds wherein the ratio of hydroxyl groups to carbon atoms is 1:1 are considered especially preferred.

Examples of suitable polyalcohols include the trialcohols selected from glycerol, sorbitol, xylitol, and mannitol, and dialcohols selected from 1,2-propanediol, 1,3-propanediol, and 1,2-ethanediol. The use of compounds selected from the group of glycerol, sorbitol, xylitol, and mannitol is preferred, with the use of glycerol being particularly preferred.

The preference for glycerol is based on the following: In the first place glycerol has a melting point of 20°C, which allows easy processing, in particular as compared to xylitol, sorbitol, and mannitol, which all have melting points well above 90°C. Further, it has been found that glycerol gives a polymer of high quality, and thus combines the use of an easily accessible source material with good processing conditions and a high-quality product. Mixtures of different types of alcohol may also be used.

It is preferred for the polyalcohol to consist for at least 70 mole% of glycerol, in particular at least 90 mole%, or even at least 95 mole%. In one embodiment the polyalcohol consists essentially of glycerol.

The use of glycerol which is a side product of the manufacture of biodiesel by the transesterification reaction of glycerides with mono-alcohols is a specific embodiment of the present invention. Suitable monoalcohols include C1-C10 monoalcohols , in particular C1-C5 monoalcohols, more in particular C1-C3 monoalcohols, specifically methanol. The glycerides are mono-di- and esters of glycerol and fatty acids, the fatty acids generally having 10-18 carbon atoms, Suitable processes for manufacturing biodiesel with associated glycerol are known in the art.

The aliphatic polycarboxylic acid used in the present invention is an aliphatic polycarboxylic acid with 3 to 15 carbon atoms, wherein the polycarboxylic acid comprises at least 50 wt.% of citric acid.

The aliphatic polycarboxylic acid used in the present invention comprises at least two carboxylic acid groups, with the proviso that the polycarboxylic acid comprises at least 50 wt.% of citric acid. The aliphatic polycarboxylic acid used in the present invention in particular comprises at least three carboxylic acid groups. In general, the number of carboxylic acid groups will be 10 or less, more in particular 8 or less, or even 6 or less.

The polycarboxylic acid has 3-15 carbon atoms. More in particular, the polycarboxylic acid has 3-10 carbon atoms.

It is preferred for the polycarboxylic acid to contain no N or S heteroatoms. More specifically it is preferred for the polycarboxylic acid to contain no non-carbon groups than the carboxylic acid groups. More in particular the polycarboxylic acid is an aliphatic polycarboxylic acid containing only C, H, and O atoms.

In one embodiment a dicarboxylic acid is used. The dicarboxylic acid, if used, may be any dicarboxylic acid which has two carboxylic acid groups and, in general, at most 15 carbon atoms. Examples of suitable dicarboxylic acids include itaconic acid, malic acid, succinic acid, glutaric acid, adipic acid and sebacic acid. Itaconic acid and succinic acid may be preferred.

In the present invention a tricarboxylic acid is used. The tricarboxylic acid may be any tricarboxylic acid which has three carboxylic acid groups and, at most 15 carbon atoms. Examples include citric acid, isocitric acid, aconitic acid (both cis and trans), and 3-carboxy-cis,cis- muconic acid. The use of citric acid is considered preferred, both for reasons of costs and of availability.

Where applicable the polycarboxylic acid may be provided as a whole or in part in the form of an anhydride, e.g., citric acid anhydride.

It has been found that the use of tricarboxylic acid results in a polyester with attractive properties. Therefore, the polycarboxylic acid comprises at least 50 wt.% of citric acid, whether or not in combination with dicarboxylic acids, other polycarboxylic acids, and mixtures thereof. In one embodiment the polycarboxylic acid comprises at least 70 wt.% of tricarboxylic acid, calculated on the total amount of polycarboxylic acid, preferably at least 90 wt.%, or even at least 95 wt.%. In one embodiment the polycarboxylic acid consists essentially of tricarboxylic acid, wherein the word essentially means that other acids may be present in amounts that do not affect the properties of the material.

In another embodiment of the invention the acid comprises at least, 2 wt.%, in particular at least 5 wt.%, more in particular at least 10 wt.% of dicarboxylic acid, calculated on the total amount of acid, preferably at least 30 wt.%.

It has been found that the use of a tricarboxylic acid, in particular citric acid, results in the formation of a high-quality composite material, in particular in combination with the use of a trialcohol such as glycerol.

Not wishing to be bound by theory we believe that there are a number of reasons why the use of a tri-acid, in particular in combination with a tri-ol results in the formation of a high-quality composite material. In the first place, the use of a tri-acid, in particular in combination with a tri-ol, makes for a highly crosslinked polymer, resulting in increased strength.

Further, where a tri-acid, and preferably also a tri-ol is used, there is a large possibility of acid or hydroxyl groups to physically or chemically interact with active groups on the cellulose-based material. This leads to improved bonding between the cellulose-based material and the polymer, which is a key desire in creating composite materials. The degree of interaction can be controlled by selection of the amount of triacid and trialcohol, and by selecting the degree of polymerization.

The molar ratio between the polyalcohol and the polycarboxylic acid will be governed by the ratio between the number of reacting groups in the alcohol(s) and acid(s) used. In general, the ratio between the number of OH groups and the number of acid groups is between 5:1 and 1:5. More in particular, the ratio may between 2:1 and 1:2, more specifically between 1.5:1 and 1:1.5, more preferably between 1.1:1 and 1:1.1. The theoretical molar ratio is 1:1.

The polymer is formed by combining the alcohol and the acid to form a liquid phase. Depending on the nature of the compounds this can be done, e.g., by heating a mixture of components to a temperature where the acid will dissolve in the alcohol, in particular in glycerol. Depending on the nature of the compounds this may be, e.g., at a temperature in the range of 20-200°C, e.g., 40-200°C, e.g. 60-200°C, or 90-200°C. In one embodiment, the mixture may be heated and mixed for a period of 5 minutes to 2 hours, more specifically 10 minutes to 45 minutes, at a temperature of 100-200°C, in particular 100-150°, more in particular at a temperature in the range of 100-140°C.

Optionally a suitable catalyst can be used for the preparation of the polyester. Suitable catalysts for the manufacture of polyester are known in the art. Preferred catalysts are those that do not contain heavy metals. Useful catalysts are strong acids like, but not limited to, hydrochloric acid, hydroiodic acid and hydrobromic acid, sulfuric acid (H2SO4), nitric acid (HNO3), chloric acid (HClO3), boric acid, perchloric acid (HClO4) trifluoroacetic acid, and trifluoromethanesulfonic acid. Catalysts like Zn-acetate and Mn-acetate can also be used, although they may be less preferred.

Optionally, after polymerization and cooling of the reaction mixture, the mixture can be (partially) neutralized with a volatile base like ammonia or an organic amine to stabilize the polyester solution. Preferred amines are amines with a low odour like, but not limited to 2-amino-2-ethyl-1,3-propanediol, 2-amino-2-methyl-1-propanol, 2-dimethylamino-2-methyl-1-propanol.

The biodegradable container or plate material comprising a layer of cellulose-based material provided with a composite surface layer comprising cellulose-based material and a polyester derived from an aliphatic polyol with 2-15 carbon atoms consisting for at least 50 mole% of glycerol and an aliphatic polycarboxylic acid with 3 to 15 carbon atoms, wherein the polycarboxylic acid comprises at least 50 wt.% of citric acid, is generally prepared by contacting the surface of a cellulose-based material with a liquid medium comprising the polyester or the polycarboxylic acid and polyalcohol precursors thereof until the cellulose-based material is partially but not completely impregnated with the liquid medium, followed by a curing step.

As it is intended to obtain an object which contains a layer of cellulose-based material and composite surface layer comprising cellulose-based material and a polyester it is important that the manufacturing conditions are selected such that the liquid medium does not penetrate the entirety of the cellulose material. This effect is governed, among others, by the following parameters: the amount of liquid medium, the viscosity of the liquid medium, the absorptive capacity of the cellulose material that is to be impregnated with the liquid medium, and the polymerization rate of the polymer in the absorbed medium.

The viscosity of the liquid medium is determined by the degree of polymerization of the polyester in the medium and the temperature. The polymerization rate of the polymer is determined by the presence of a catalyst and the temperature. Given these parameters it is within the scope of the skilled person to select suitable contacting conditions.

For example: a cellulose-based material may be contacted at room temperature with an aqueous solution of the polyester. It is also possible to contact a cellulose-based material with the polyester in liquid form at elevated temperature. It is also possible to contact a cellulose-based material under polymerization conditions with a liquid comprising polyalcohol, polycarboxylic acid, and a polymerization catalyst.

The liquid medium comprising polyester or polyester precursors may be applied onto the packaging via methods known in the art, such as dipping, spraying, flowing, rolling, brushing, or cascading. Spraying has been found to be particularly suitable for application of homogeneous layers of low amounts of resin, e.g., in the range of 1 to 10 wt.%, and in cases where the cellulose material has a tendency to quickly absorb large amounts of resins, e.g., where the cellulose material has a high porosity or is relatively hydrophilic, e.g., when no sizing agents are used.

Dipping has been found to be particularly attractive for surfaces with an inhomogeneous structure such as angles, corners, dips, and protrusions.

After application of the polyester on the cellulose-based material, the resulting impregnated material is subjected to a curing step to increase the degree of polymerization of the polyester. The crux of the curing step is that the polyester is at reaction temperature, e.g., a product temperature of 80-250°C, in particular between of 100-200°C. Curing can be carried out in heating apparatus known in the art, e.g., in in an oven with an oven temperature from 80°C up to 450°C. Different types of ovens may be used, including but not limited to belt ovens, convection ovens, microwave ovens, infra red ovens, induction oven, hot-air ovens, conventional baking ovens and combinations thereof. Curing can be done in a single step, or in multiple steps, depending on the desired application. The curing times range from 5 seconds up to 2 hours, depending on the application and on the type of oven and temperature used. It is within the scope of a person skilled in the art to select suitable curing conditions, depending on the desired application and desired properties.

If so desired, the impregnated material may be subjected to a drying step before the curing step is carried out. The drying step, which is generally carried out at a temperature of room temperature, e.g., 15°C, or 20°C, to 100°C is carried out to remove water from the composite. It can be carried out, for example for 0,25 hours to 3 days, depending on the amount of water in the composite, the thickness of the layer, and the temperature.

The amount of polyester resin present in the biodegradable container or plate material generally is in the range of 0.5-90 wt.%. It is preferred to use not more resin than required to obtain a material having the desired properties, as this will only lead to additional weight and cost. It may be preferred for the amount of resin to be at most 50 wt.%, in particular at most 30 wt.%, in some embodiments at most 20 wt.%, or even at most 15 wt.%. To obtain the effect of the present invention, generally at least 0.5 wt.% of polyester resin will be required, in particular at least 1 wt.%.

As indicated above, the biodegradable container or plate material according to the invention shows one or more, in particular a combination of light weight, high (wet) strength, a desirable degree of flexibility, good (temporary) resistance against water, oil, and fat, and attractive visual and tactile characteristics. It is therewith suitable for many applications. For example, it can be used as an alternative to most fossil based (single use) plastics for e.g. packaging and disposables which together account for about 40% of the plastics market. Reducing plastic waste and lowering CO2 emissions is the top priority of the EU when it comes to environmental action. New legislation forces industries to use alternatives to fossil-based (non-biodegradable) plastics.

Specific uses for the material according to the invention include, but are by no means limited to plant pots and packaging containers for materials comprising fats or moisture, such as meat, fish, vegetables, and other food products. In the context of using the materials for food packaging it is worthwhile to note that the polyester used in the present invention is safe for people, animals, and the environment.

The present invention will be elucidated by the following examples, without being limited thereto or thereby.

### Example 1. Preparation of solution of polyol and polycarboxylic acid polyester precursor

12 kg of tap water was heated to 90°C in a 50 I container. 25 kg of citric acid monohydrate (purity > 99%) was added under stirring. A solution was obtained with a temperature of 38°C. 12.5 kg of 99% pure glycerol was added to this solution. The solution was allowed to cool to room temperature and further diluted with tap water until a water concentration of 50% was obtained. 0,5wt% of boric acid was added as catalyst.

### Example 2. Preparation of solution of polyester prepolymer

1.0 kg of > 99% pure glycerol and 2.0 kg of citric acid (purity > 99%) were put in a stirred and heated reactor. Also 9 g of boric acid (0.5 m/m, > 99% purity) was added. The mixture was heated up in about 15 minutes until 135°C and kept at that temperature for 15 minutes followed by dilution with tap water to a water content of 50% and further cooling down.

### Example 3: Partial impregnation of cellulose-based plant pot based on recycled paper

Moulded cylindrical plant pots made of cellulose fibre pulp regenerated from predominantly unprinted recycled book paper, containing 0.5 % of alkylsuccinic anhydride were used as starting material. The pots were 9 cm in height, 11 cm in diameter at the top and 7 cm in diameter at the bottom. The average weight was 14.2 gram.

Pots as described above were dipped at room temperature for 6 seconds in the solution of polyester prepolymer described in Example 2. The wet pots were dried at room temperature for 4 hours and cured for 20 min in a ventilation oven with an internal temperature of 190°C. Final product temperature was 180°C. After curing the pots weighed on average 16,7 gram, with a polyester content of 15 wt.%. A cross-section of the wall of the pot showed the existence of a resin-free layer between two resin-containing layers.

The following table shows the dry strength, the strength after immersion in water for five minutes at room temperature, and the strength after immersion in sunflower oil for 10 seconds at room temperature, for starting pots and for pots provided with the polyester resin. For each measurement four pots were used. Strength was determined using the universal testing machine (UTM) (Testrometic, M350-20CT) with a plate compression test and measuring the peak force when the pot was placed upside down (bottom to the top plate and top to the bottom compression plate).

| Sample | Dry | After 5 minutes in water | After 10 seconds in oil |
|---|---|---|---|
| | peak force (N) | peak force (N) | peak force (N) |
| | | | |
| Impregnated | 1090 | 777 | 1044 |
| Starting material | 789 | 170 | 548 |

From the table it can be seen that impregnated pots have a higher strength than the starting material.

Further, the strength of the impregnated pot after immersion for 5 minutes in water at room temperature decreased with about 30% as compared to the strength of the impregnated pot before impregnation, resulting in the retention of acceptable strength. In contrast, upon immersion for 5 minutes in water at room temperature, unimpregnated pots collapsed, showing no acceptable strength retention.

The strength of the impregnated pot after immersion for 10 seconds in sunflower oil at room temperature remained unchanged. In contrast, upon immersion for 10 seconds in sunflower oil at room temperature, unimpregnated pots showed a decrease in strength of 30% as compared to the pot before immersion.

The impregnated pots were more rigid than the unimpregnated pots but still showed some flexibility (top edges of the pot can be moved towards each other 2-3 cm before the pots are gets damaged).

The application of the impregnation resulted in an considerably improved mechanical (wet) strength for water and oil. Furthermore, the colour of the pot changed from off while to an attractive light brown.

### Example 4: Partial impregnation of cellulose-based plant pot based on virgin paper

As starting materials pots were prepared with the same size, shape, and weight as those used in Example 3. The pots were based on virgin cellulose fibre, modified with 0.5 wt.% alkylsuccinic anhydride. The pots were 9 cm in height, 11 cm in diameter at the top and 7 cm in diameter at the bottom. They weighed on average 14.5 gram.

The pots were dipped at room temperature for 6 seconds in the solution of polyol and polyacid described in Example 1. The wet pots were dried at room temperature for 4 hours and cured for 20 min in an ventilation oven with an internal temperature of 190°C, with a final product temperature of 180°C. After curing the pots weighed on average 17.7 grams, corresponding to a polyester content of 18 wt.%. A cross-section of the wall of the pots showed the existence of a resin-free layer between two resin-containing layers. The pot was much more rigid than the unimpregnated pot but still showed some flexibility (top edges of the pot can be moved towards each other 2-3 cm before the pot gets damaged). Furthermore, it had an attractive brown coloured outer surface and very good tactile properties. The latter is probably due to the fact that the tactile properties of the virgin paper pot are better than those of the pot based on recycled paper.

The strength of the impregnated pots was about 80% higher (average 1332 N) than the strength of the pot before impregnation (average 734 N), and about 20% higher to that of the impregnated pot described in Example 3. The latter may be due to the pot having a slightly higher resin content and the fibers of the virgin cellulose being longer than those of the recycled paper used in Example 3.

After immersion in water or oil under the conditions described in the previous example, the impregnated pots retained most of their strength, while unimpregnated pots did not.

### Example 5: impregnation of virgin cellulose-based plant pot - Comparative

A comparative pot was prepared by impregnating a plant pot of virgin cellulose fibre with the solution of Example 1 under such conditions that it was completely impregnated with resin.

The wet pot was dried at room temperature for 4 hours and cured for 20 min in an ventilation oven with an internal temperature of 190 °C (final product temperature id 180°C). After curing the container weighed 41 grams gram, with a polyester content of ~65 wt.%.

A cross-section of the wall of the pot showed no resin-free layer. The pot was completely made up of composite material. The pot has a nice brown color, a high strength, and a ceramic appearance. It had, however, little flexibility which may be disadvantageous in filling and emptying the pot. Additionally, it was quite brittle. Further, the relatively large weight makes it less attractive because of the higher material and transportation costs.

### Example 6: Partial impregnation of paper-based food tray

A smooth small rectangular food tray (L*W at the top 21*14 cm, and at the bottom 17*10 cm and a height of 5,5 cm) made of dense thin walled thermoformed fiber derived from cellulose fibre regenerated from unprinted recycled paper, containing 0.6 wt.% alkylsuccinic anhydride, and weighing 20.1 grams was dipped at room temperature for 6 seconds in the solution described in Example 2. After dipping the wet tray was dried at room temperature for 4 hours and cured for 20 min in a ventilation oven with an internal temperature of 190°C (final product temperature 180°C). After curing the pot weighed 22.2 grams and the estimated polyester content was 10%. A cross-section of the wall of the tray showed the existence of a resin-free layer between two resin-containing layers
The tray was more rigid than the unimpregnated tray but still showed some flexibility. The top layer had an attractive glossy light brown appearance.

The oil resistance of the impregnated tray was tested at 50°C in a ventilation oven for 2 hours. An amount of 10 drops of sunflower oil was put on the bottom of an impregnated tray and an unimpregnated tray, respectively. The impregnated tray showed good oil resistance as no oil permeated in or trough the tray. The oil stayed completely on the surface of the tray and the colour of the tray remained unchanged. On the unimpregnated tray the oil permeated immediately into the paper and a dark "wet stain" appeared on the top and bottom of the tray where the oil had been applied.

### Example 7: neutralized acid

To 100 grams of a polyester solution as in example 2 was added 1,0g of 2-amino-2-methyl-1-propanol, commercially available from Angus Chemie under the trade name of AMP.

A similar small cylindrical plant pot as described in Example 3 was treated the same way as described in example 3 and similar material characteristics were obtained. In this case, the addition AMP to the solution stabilised the prepolymer solution. Upon curing the pot, the base evaporates, and the polyester cures further to its final degree of polymerisation.

### Example 8: comparison with polyesters based on diacid and diol

Moulded cylindrical plant pots made of cellulose fibre pulp regenerated from predominantly unprinted recycled book paper, containing 0.5 % of alkylsuccinic anhydride were used as starting material. The pots were 8.4 cm in height, 11 cm in diameter at the top and 7 cm in diameter at the bottom. The average weight was 13.7 gram.

Two dipping solutions were prepared, with the following respective compositions:

| Solution A - dialcohol - diacid Comparative | wt.% |
|---|---|
| Glutaric acid | 31.5 |
| 1,3-propanediol | 18.4 |
| Water | 50.1 |

| Solution B - trialcohol - triacid Invention | wt.% |
|---|---|
| Citric acid (anhydrous) | 32.4 |
| Glycerol | 17.2 |
| Water | 50.5 |

Pots as described above were dipped at room temperature for 10 seconds in solution A or B. The solutions were at a temperature of 45°C. The wet pots were dried at room temperature for 1 hour and cured for 20 min in a ventilation oven with an internal temperature of 190°C.

The weight of the pots after dipping and drying was as given below. The values are the average of 6 measurements. The numbers in parentheses are the percentage increase compared to the weight of the dry starting pots.

| | Dipped with solution A Comparative | Dipped with solution B Invention |
|---|---|---|
| Dry pots | 14 g (100%) | 14 g (100%) |
| After dipping an 1 hour drying in air | 30 g (219%) | 18 g (129%) |
| After overnight storage | 16 g (120%) | 15 g (109%) |

Water uptake was determined after submerging the pots for 10 minutes in water. The values are the average of 3 measurements. The numbers in parentheses are the percentage increase compared to the weight of the dry starting pots.

| | Dipped with solution A Comparative | Dipped with solution B Invention |
|---|---|---|
| Dry weight | 16 g | 15 g |
| Weight after 10 minutes immersion | 38 g (232%) | 19 g (124%) |

Compression strength was determined as described in Example 3, both for the wet and dry plant pots. For the dry pots the data are the average of 4 measurements. For the wet pots the data were the average of 2 measurements. The results were as follows:

| | Dry pots - peak force (N) | After 10 minutes in water - peak force (N) |
|---|---|---|
| Dipped with solution A Comparative | 692 | 183 |
| Dipped with solution B Invention | 825 | 320 |

From the above comparisons it can be seen that the pots impregnated with solution B according to the invention have a higher compression strength than pots impregnated with comparative solution A, both in the dry state and in the wet state. Additionally, the pots impregnated with solution B have a lower water uptake than the pots impregnated with solution A. It should be noted that the pots impregnated with solution B have a lower resin content than the pots impregnated with solution A, making the effects obtained with the polyester according to the invention even more surprising.

## Claims

1. Biodegradable container or plate material comprising a layer of cellulose-based material provided with a composite surface layer comprising cellulose-based material and a polyester derived from an aliphatic polyalcohol with 2-15 carbon atoms, the aliphatic polyalcohol containing at least 50 mole% of glycerol and an aliphatic polycarboxylic acid with 3 to 15 carbon atoms, wherein the polycarboxylic acid comprises at least 50 wt.% of citric acid, the cellulose-based material containing at least 70 wt.% of cellulose material.

2. Biodegradable container or plate material according to claim 1, wherein the cellulose-based material contains at least 80 wt.% of a cellulose material, e.g., cellulose material derived as fresh or used paper, fresh or used cardboard, wood or other plant material in any form, or combinations thereof.

3. Biodegradable container or plate material according to any one of the preceding claims, which comprises one or more additives to improve one or more of hydrophobicity, dry strength, and wet strength, and/or one or more fillers or binders..

4. Biodegradable container or plate material according to any one of the preceding claims, wherein the polyalcohol consists for at least 70 mole% of glycerol, in particular at least 90 mole%, or even at least 95 mole%, or the polyalcohol consists essentially of glycerol.

5. Biodegradable container or plate material according to any one of the preceding claims, wherein the polycarboxylic acid comprises at least 70 wt.% of citric acid, calculated on the total amount of the polycarboxylic acid, preferably at least 90 wt.%, or even at least 95 wt.%.

6. Biodegradable container or plate material according to any one of the preceding claims, wherein, calculated on the total of the layer of cellulose-based material and polyester-containing composite surface layer, in a cross-section of the biodegradable container or plate material, 1-90% of the cross-section is composite surface layer and 99-10% of the cross-section is the layer of cellulose-based material, in particular 2-50% of the cross-section is polyester-containing composite surface layer and 98-50% of the cross-section is the layer of cellulose-based material, preferably 2-30% of the cross-section is polyester-containing composite surface layer and 98-70% of the cross-section is the layer of cellulose-based material.

7. Biodegradable container or plate material according to any one of the preceding claims, wherein the amount of polyester present in the biodegradable container or plate material is in the range of 0.5-90 wt.%, in particular at most 50 wt.%, more in particular at most 30 wt.%, in some embodiments at most 20 wt.%, or even at most 15 wt.% and/or at least 1 wt.%.

8. Biodegradable container or plate material according to any one of the preceding claims, which is a plant pot, or a packaging material, in particular for moisture or oil-containing products, more in particular for food products.

9. Method for manufacturing a biodegradable container or plate material according to any one of the preceding claims, which comprises
a step of contacting the surface of a cellulose-based material with a liquid medium comprising polyester or polycarboxylic acid and polyalcohol precursors thereof until the cellulose-based material is partially but not completely impregnated with the liquid medium, the polyester being derived from an aliphatic polyalcohol with 2-15 carbon atoms containing at least 50 mole% of glycerol and an aliphatic polycarboxylic acid with 3 to 15 carbon atoms, wherein the polycarboxylic acid comprises at least 50 wt.% of citric acid,
and
a curing step.

10. Method according to claim 9, wherein the step of contacting the surface of a cellulose-based material with a liquid medium is carried out through dipping, spraying, flowing, rolling, brushing or cascading.

11. Method according to any one of the preceding claims 9 or 10, wherein the curing step is carried out at a product temperature of 80-250°C, in particular 100-200°C.

12. Method according to any one of claims 9-11, wherein a drying step is carried out before the curing step, wherein the drying step is preferably carried out at a temperature up to 100°C.

## Patentansprüche

1. Biologisch abbaubarer Behälter oder biologisch abbaubares Plattenmaterial, umfassend eine Schicht aus einem Material auf Cellulosebasis, die mit einer Verbundoberflächenschicht versehen ist, umfassend Material auf Cellulosebasis und einen Polyester, abgeleitet von einem aliphatischen Polyalkohol mit 2-15 Kohlenstoffatomen, wobei der aliphatische Polyalkohol mindestens 50 Mol-% Glycerin und eine aliphatische Polycarbonsäure mit 3 bis 15 Kohlenstoffatomen enthält, wobei die Polycarbonsäure mindestens 50 Gew.-% Citronensäure umfasst, wobei das Material auf Cellulosebasis mindestens 70 Gew.-% Cellulosematerial enthält.

2. Biologisch abbaubarer Behälter oder biologisch abbaubares Plattenmaterial nach Anspruch 1, wobei das Material auf Cellulosebasis mindestens 80 Gew.-% eines Cellulosematerials enthält, z.B. Cellulosematerial abgeleitet als Frisch- oder Altpapier, frischer oder gebrauchter Karton, Holz oder anderes Pflanzenmaterial in jeglicher Form, oder Kombinationen davon.

3. Biologisch abbaubarer Behälter oder biologisch abbaubares Plattenmaterial nach einem der vorhergehenden Ansprüche, welcher/welches ein oder mehrere Additive zur Verbesserung eines oder mehrerer aus Hydrophobie, Trockenfestigkeit und Nassfestigkeit, und/oder ein(en) oder mehrere Füllstoffe oder Bindemittel umfasst.

4. Biologisch abbaubarer Behälter oder biologisch abbaubares Plattenmaterial nach einem der vorhergehenden Ansprüche, wobei der Polyalkohol zu mindestens 70 Mol-%, insbesondere mindestens 90 Mol-% oder sogar mindestens 95 Mol-% aus Glycerin besteht oder der Polyalkohol im Wesentlichen aus Glycerin besteht.

5. Biologisch abbaubarer Behälter oder biologisch abbaubares Plattenmaterial nach einem der vorhergehenden Ansprüche, wobei die Polycarbonsäure mindestens 70 Gew.-% Citronensäure, berechnet bezogen auf die Gesamtmenge an Polycarbonsäure, vorzugsweise mindestens 90 Gew.-% oder sogar mindestens 95 Gew.-% umfasst.

6. Biologisch abbaubarer Behälter oder biologisch abbaubares Plattenmaterial nach einem der vorhergehenden Ansprüche, wobei, berechnet bezogen auf die Gesamtheit der Schicht aus einem Material auf Cellulosebasis und polyesterhaltiger Verbundoberflächenschicht , in einem Querschnitt des biologisch abbaubaren Behälters oder Plattenmaterials 1-90% des Querschnitts Verbundoberflächenschicht ist und 99-10% des Querschnitts die Schicht aus Material auf Cellulosebasis ist, insbesondere 2-50% des Querschnitts polyesterhaltige Verbundoberflächenschicht ist und 98-50% des Querschnitts die Schicht aus Material auf Cellulosebasis ist, vorzugsweise 2-30% des Querschnitts polyesterhaltige Verbundoberflächenschicht ist und 98-70% des Querschnitts die Schicht aus Material auf Cellulosebasis ist.

7. Biologisch abbaubarer Behälter oder biologisch abbaubares Plattenmaterial nach einem der vorhergehenden Ansprüche, wobei die Menge an in dem biologisch abbaubaren Behälter oder Plattenmaterial vorhandenem Polyester im Bereich von 0,5-90 Gew.-%, besonders höchstens 50 Gew.-%, insbesondere höchstens 30 Gew.-%, in einigen Ausführungsformen höchstens 20 Gew.-% oder sogar höchstens 15 Gew.-% und/oder mindestens 1 Gew.-% ist

8. Biologisch abbaubarer Behälter oder biologisch abbaubares Plattenmaterial nach einem der vorhergehenden Ansprüche, bei welchem es sich um ein Pflanzgefäß oder ein Verpackungsmaterial, besonders für Feuchtigkeit oder Öl enthaltende Produkte, insbesondere für Lebensmittelprodukte, handelt.

9. Verfahren zur Herstellung eines biologisch abbaubaren Behälters oder Plattenmaterials nach einem der vorhergehenden Ansprüche, welches
einen Schritt des Kontaktierens der Oberfläche eines Materials auf Cellulosebasis mit einem flüssigen Medium, umfassend Polyester oder Polycarbonsäure- und Polyalkohol-Vorläufer davon, bis das Material auf Cellulosebasis teilweise, aber nicht vollständig mit dem flüssigen Medium imprägniert ist, wobei der Polyester abgeleitet ist von einem aliphatischen Polyalkohol mit 2-15 Kohlenstoffatomen, der zu mindestens 50 Mol-% aus Glycerin besteht und einer aliphatischen Polycarbonsäure mit 3 bis 15 Kohlenstoffatomen, wobei die Polycarbonsäure mindestens 50 Gew.-% Citronensäure umfasst, und
einen Härtungsschritt
umfasst.

10. Verfahren nach Anspruch 9, wobei der Schritt des Kontaktierens der Oberfläche eines Materials auf Cellulosebasis mit einem flüssigen Medium durch Tauchen, Sprühen, Fließen, Walzen, Bürsten oder Kaskadieren durchgeführt wird.

11. Verfahren nach einem der vorhergehenden Ansprüche 9 oder 10, wobei der Härtungsschritt bei einer Produkttemperatur von 80-250°C, insbesondere 100-200°C, durchgeführt wird.

12. Verfahren nach einem der Ansprüche 9-11, wobei ein Trocknungsschritt vor dem Härtungsschritt durchgeführt wird, wobei der Trocknungsschritt vorzugsweise bei einer Temperatur bis 100°C durchgeführt wird.

## Revendications

1. Matériau de contenant ou de plaque biodégradable comprenant une couche de matériau à base de cellulose dotée d'une couche de surface composite comprenant un matériau à base de cellulose et un polyester dérivé d'un polyalcool aliphatique avec 2 à 15 atomes de carbone, le polyalcool aliphatique contenant au moins 50 % en mole de glycérol et d'un acide polycarboxylique aliphatique avec 3 à 15 atomes de carbone, dans lequel l'acide polycarboxylique comprend au moins 50 % en poids d'acide citrique, le matériau à base de cellulose contenant au moins 70 % en poids de matériau de cellulose.

2. Matériau de contenant ou de plaque biodégradable selon la revendication 1, dans lequel le matériau à base de cellulose contient au moins 80 % en poids d'un matériau de cellulose, par exemple matériau de cellulose dérivé comme papier neuf ou usagé, carton neuf ou usagé, bois ou autre matériau végétal sous toute forme ou des combinaisons de ceux-ci.

3. Matériau de contenant ou de plaque biodégradable selon l'une quelconque des revendications précédentes qui comprend un ou plusieurs additifs pour améliorer une ou plusieurs parmi l'hydrophobicité, la résistance à l'état sec et la résistance à l'état humide et/ou un ou plusieurs agents de charge ou liants.

4. Matériau de contenant ou de plaque biodégradable selon l'une quelconque des revendications précédentes, dans lequel le polyalcool se compose d'au moins 70 % en mole de glycérol, en particulier d'au moins 90 % en mole, ou même d'au moins 95 % en mole, ou le polyalcool se compose essentiellement de glycérol.

5. Matériau de contenant ou de plaque biodégradable selon l'une quelconque des revendications précédentes, dans lequel l'acide polycarboxylique comprend au moins 70 % en poids d'acide citrique, calculé sur la quantité totale de l'acide polycarboxylique, de préférence au moins 90 % en poids ou même au moins 95 % en poids.

6. Matériau de contenant ou de plaque biodégradable selon l'une quelconque des revendications précédentes, dans lequel calculé sur le total de la couche de matériau à base de cellulose et de la couche de surface composite contenant du polyester, dans une section transversale du matériau de contenant ou plaque biodégradable, 1 à 90 % de la section transversale est une couche de surface composite et 99 à 10 % de la section transversale est la couche de matériau à base de cellulose, en particulier 2 à 50 % de la section transversale est une couche de surface composite contenant du polyester et 98 à 50 % de la section transversale est la couche de matériau à base de cellulose, de préférence 2 à 30 % de la section transversale est une couche de surface composite contenant du polyester et 98 à 70 % de la section transversale est la couche de matériau à base de cellulose.

7. Matériau de contenant ou de plaque biodégradable selon l'une quelconque des revendications précédentes, dans lequel la quantité de polyester présent dans le matériau de contenant ou de plaque biodégradable est dans la plage de 0,5 à 90 % en poids, en particulier au plus de 50 % en poids, plus particulièrement au plus de 30 % en poids, dans certains modes de réalisation au plus de 20 % en poids ou même au plus de 15 % en poids et/ou au moins de 1 % en poids.

8. Matériau de contenant ou de plaque biodégradable selon l'une quelconque des revendications précédentes qui est un pot de plantation ou un matériau d'emballage, en particulier pour des produits contenant de l'humidité ou de l'huile, plus particulièrement pour des produits alimentaires.

9. Procédé de fabrication d'un matériau de contenant ou de plaque biodégradable selon l'une quelconque des revendications précédentes, qui comprend
une étape de mise en contact de la surface d'un matériau à base de cellulose avec un agent liquide comprenant du polyester ou de l'acide polycarboxylique et des précurseurs de polyalcool de celui-ci jusqu'à ce que le matériau à base de cellulose soit partiellement mais pas complètement imprégné avec l'agent liquide, le polyester étant dérivé d'un polyalcool aliphatique avec 2 à 15 atomes de carbone contenant au moins 50 % en mole de glycérol et d'un acide polycarboxylique aliphatique avec 3 à 15 atomes de carbone, dans lequel l'acide polycarboxylique comprend au moins 50 % en poids d'acide citrique, et
une étape de durcissement.

10. Procédé selon la revendication 9, dans lequel l'étape de mise en contact de la surface d'un matériau à base de cellulose avec un agent liquide est réalisée par trempage, pulvérisation, écoulement, laminage, brossage ou éclat en cascade.

11. Procédé selon l'une quelconque des revendications précédentes 9 ou 10, dans lequel l'étape de durcissement est réalisée à une température de produit de 80 à 250 °C, en particulier de 100 à 200 °C.

12. Procédé selon l'une quelconque des revendications précédentes 9 à 11, dans lequel une étape de séchage est réalisée avant l'étape de durcissement, dans lequel l'étape de séchage est de préférence réalisée à une température allant jusqu'à 100 °C.
